(19)

Europäisches
Patentamt
European
Patent Office
Office européen
des brevets

(11) **EP 1 816 338 A1**

(12) **EUROPEAN PATENT APPLICATION**

(43) Date of publication:
 **08.08.2007 Bulletin 2007/32**

(51) Int Cl.:
 *F02M 25/08* [(2006.01)]

(21) Application number: **06101356.1**

(22) Date of filing: **07.02.2006**

(84) Designated Contracting States:
 **AT BE BG CH CY CZ DE DK EE ES FI FR GB GR
 HU IE IS IT LI LT LU LV MC NL PL PT RO SE SI
 SK TR**
 Designated Extension States:
 **AL BA HR MK YU**

(71) Applicant: **Inergy Automotive Systems Research
 (SA)
 1120 Bruxelles (BE)**

(72) Inventor: **The designation of the inventor has not
 yet been filed**

(74) Representative: **Jacques, Philippe et al
 Solvay S.A.
 Département de la Propriété Industrielle,
 Rue de Ransbeek, 310
 1120 Bruxelles (BE)**

(54) **Leak detection method and associated fuel system**

(57)    Method of detecting a leak in a fuel system comprising a fuel tank and an orifice with a controlled section between the tank and the atmosphere, according to which

a) the controlled section is set to a value $A_1$ at a time $T_1$ and a pressure differential $\Delta p_1$ between the inside of the tank and the atmosphere is measured at least after an interval of time $\Delta T$ from $T_1$, for a constant fuel flow out of the tank;

b) the controlled section is set to a value $A_2$ at a time $T_2$ and a pressure differential $\Delta p_2$ between the inside of the tank and the atmosphere is measured at least after the same interval of time $\Delta T$ from $T_2$, for the same constant fuel flow;

c) a ratio of the pressure differentials $\Delta p_1$ and $\Delta p_2$ is computed and is compared to a reference pressure differential ratio $\Delta p_L$ obtained with the same fuel system but comprising a calibrated leak.

Figure 1

**Description**

TECHNICAL FIELD

The present invention relates to a leak detection method and a leak detection system for a fuel system.

BACKGROUND

Increasing the safety of currently used fuel tanks, involves the prevention or minimization of fuel vapour leaks. Both the Environmental Protection Agency (EPA) and the California Air Resources Board (CARB), specify the requirement of On-Board Diagnostic II (OBD II) for the check for evaporative emission system for leaks. This requires detecting system leaks equivalent to an orifice larger than 0.5 mm (0.020 inch) in diameter for vehicles produced starting model year 2000.

A fuel tank generally contains fuel in gaseous and liquid form. In particular conditions, eg. raise of temperature, a dangerous build-up of pressure may occur inside the fuel tank. For that reason it is advantageous to vent the fuel tank, providing there is no emission of hydrocarbons to the atmosphere.

In order to prevent this emission, the fuel tank is generally vented using an evaporative emission control system comprising in general a vapour canister containing an adsorptive material (eg. charcoal), through which fuel vapours escaping from the fuel tank are directed.

Leaks in the fuel tank or at the interface between the fuel tank and components (eg. canister, valves, ...) may exist and their presence must be checked.

PRIOR ART

Current technologies involving leak detection are separated into detection of very small, small and gross leaks. Small leak detection relates to the detection of a leak equivalent to an opening having a diameter smaller than 1 mm (0.040 inch), and gross leaks detection relates to the detection of a leak equivalent to an opening having a diameter greater or equal to 12 mm (0.5 inch) and corresponding to a fuel cap off condition, ie. the filler pipe is not closed on the fill side. The detection of very small leaks corresponds to the detection of a leak equivalent to an opening with a diameter of about 0.5 mm (0.020 inch).

Prior inventions for detecting leaks use concepts of pressure levels and/or vacuum levels in the fuel tank. Some of them also use purge concepts to do the measurements.

An example of very small leak detection method in an evaporative emission control system is revealed in US patent 5,637,788. As a first step of the detection method, a vapour flow rate in a fuel tank is measured while a differential pressure between the inside of the fuel tank and the atmosphere is zero. Because the differential pressure across the tank is zero, there is no flow through any leaks in the tank but there is only a flow rate indicative of a vapour generation rate. The next step of the method is to measure the flow rate at another differential pressure achieved by pulling the vacuum on the fuel tank. At the lower differential pressure, flow will develop through any leaks in the tank in addition to flow due to vapour generation. Both flow measurements are then substracted, the result being indicative of a leak flow, so that the vapour flow is cancelled out. Statistical processing or filtering can be used to account for fluctuations of the vapour flow during the measurements. The cost of the detection method is high since additional processing devices are to be implemented.

Additionally, known prior art methods for leak detection are generally carried out when the engine has been turned off. It is in particular the case with the method described in US patent 6,314,797.

SUMMARY OF THE INVENTION

To avoid the drawbacks of prior art, the applicant's invention relates to a system using existing technology, i.e. current components of the fuel system with no need for any additional sensors, or devices. It does not require any additional devices, volumes, or changes to the normal day to day operation of the vehicles. With the help of an intelligent fuel system or IFS (i.e. a fuel system comprising a fuel system control unit (FSCU) and data network connection), the present invention allows a continuous and accurate detection of leaks (even small leaks) in a fuel system based on the measurement of pressure differentials, which does not burden neither the cost nor the efficiency of the result since the IFS uses only existing sensors to perform the leak detection.

DESCRIPTION OF THE INVENTION

To this effect the present invention relates to a method of detecting a leak in a fuel system comprising a fuel tank and an orifice with a controlled section between the tank and the atmosphere, according to which

a) the controlled section is set to a value $A_1$ at a time $T_1$ and a pressure differential $\Delta p_1$ between the inside of said fuel tank and the atmosphere is measured at least after an interval of time $\Delta T$ from $T_1$, for a constant fuel flow $F$ out of said fuel tank;
b) the controlled section is set to a value $A_2$ at a time $T_2$ and a pressure differential $\Delta p_2$ between the inside of said fuel tank and the atmosphere is measured at least after the same interval of time $\Delta T$ from $T_2$, for the same constant fuel flow $F$;
c) a ratio of said pressure differentials $\Delta p_1$ and $\Delta p_2$ is computed and is compared to a reference pressure differential ratio $\Delta p_L$ obtained with the same fuel system but comprising a calibrated leak.

According to the invention, the fuel system comprises a fuel tank.

The fuel tank is a hollow body of varying shapes, which may be equipped with various internal or external accessories, and even accessories passing through the wall of the chamber.

The fuel tank according to the invention may be made of any composition or material compatible with the fuels and the habitual conditions of use. It may, for example, be made of a material the composition of which contains at least one metal or one plastic. The invention gives good results with fuel tanks made of polymeric material. The polymeric material is preferably selected from the group consisting of polyethylene, polyethylene terephthalate, polybutylene terephthalate, polyamide, polyoxymethylene, polypropylene, elastomers and mixtures of two or more thereof Preferably, the polymeric material comprises high density polyethylene (HDPE). In a specific embodiment, the hollow element also comprises a layer of barrier material like EVOH (at least partially hydrolysed ethylene - vinyl acetate copolymers). Alternatively, the HDPE may be surface treated (by fluorination, sulphonation or the like) in order to reduce its permeability to fuel.

According to the invention the fuel system comprises also an orifice with a controlled section between the tank and the atmosphere, i.e. a section that can be modified and set to a specified value in a controlled way.

At stages a) and b) of the method according to the invention, the flow of fuel $F$ out of the tank is constant, i.e. it is controlled in such a way as to stay equal to a pre-set test value $F_{test}$.

The reference pressure differential ratio $\Delta p_L$ according to step c) of the method is obtained in the same manner as the ratio of pressure differentials $\Delta p_1$ and $\Delta p_2$ : it is computed as the ratio of two pressure differentials corresponding to the values $A_1$ and $A_2$ of the controlled section, to the same fuel flow $F_{test}$ and measured in the same manner as $\Delta p_1$ and $\Delta p_2$.

The reference pressure differential ratio $\Delta p_L$ is obtained with the same fuel system but comprising a calibrated leak. This calibrated leak is chosen so as to apply requirements of standardized leak tests (eg. in OBD II tests) : eg. an orifice diameter of 0.5 mm for small leaks may be chosen as a maximum leak section acceptable to pass the OBD II tests.

The fuel system of the invention preferably comprises an evaporative emission control system aimed at controlling the emission of fuel vapour generated in the fuel tank. The evaporative emission control system generally comprises a fuel vapour canister filled with adsorbent material (eg. charcoal) that captures hydrocarbons from the fuel vapour; a venting line equipped with one or several vent valves and/or roll-over-valves (ROV) communicating the fuel tank with the fuel vapour canister; a purge line and a valve between the canister and the engine, and a vent port between the canister and the atmosphere.

This evaporative emission control system comprises an electronically controlled electromechanical valve, of the type described in patent application PCT/EP2006/05008, the content of which being included herein by reference.

In particular, the electromechanical valve comprises a stationary outer housing comprising at least three bores, and a translating inner section which translates along the primary axis of the outer housing and which comprises adequate bores defining with the bores of the housing at least three ports of the valve.

This electromechanical valve acts as a venting valve and is normally open so that the canister collects hydrocarbon vapour generated by the fuel in the tank. When used in the frame of the invention, it connects the tank and the canister either through a large venting orifice or through a small venting orifice.

The orifice of controlled section is preferably between the fuel tank and the canister, and the controlled section is controlled by the electromechanical valve.

The electromechanical valve may also act as a purge valve, normally closed, and is modulated to draw the vapour out of the canister for ingestion in an engine intake system, in general either when the engine turns at normal speed or when the engine turns at idle speed.

Generally, said evaporative emission control system also includes a vent port and a vent line connecting the canister to the atmosphere. It is namely so that when the fuel vapour/air mixture coming from the fuel tank passes through the canister, it is separated, i.e. only the fuel vapour is absorbed on the adsorbent material while the air is not. Since this air is clean, it can be sent back to the atmosphere, which is done through the vent port. The vent port also allows air to come into the fuel system.

According to a preferred embodiment of the invention, the fuel system comprises a fuel system control unit (FSCU).

The FSCU can manage the operating conditions and functioning parameters of the fuel system. The FSCU generally

- has means for controlling functions of the fuel system,
- is connected with at least one fuel system component to send signals or receive signals from said at least one fuel system component,
- is connected with at least one sensor that sends signals to the FSCU and/or receives signals from an engine control unit (ECU),
- is adapted to electronically and bi-directionally communicate with the ECU.

The FSCU preferably is a standalone controller, different from the ECU and which has taken over the control of the fuel system from the ECU, ie. the ECU does not directly control the fuel system any longer. The FSCU communicates with the ECU also for indication of any fuel system failure to the ECU.

The FSCU preferably controls the operation of all components integrated in the fuel system during normal and transient operating conditions of the engine, receives data on the operating parameters and sends information to make the components function. In general this control was previously made by the ECU or by component-dedicated electronic controllers (for instance, dedicated controllers for fuel pump management). The burden of controlling the fuel system is preferably switched to the FSCU.

The FSCU may also control the vapour management in the fuel system. The purging of the fuel vapour canister may be under the control of the FSCU. This control can be dealt with through the purge valve (eg. three-way switching valve embodied in a solenoid actuator) that allows communication between the canister and the engine air intake system. The actuator opens the purge valve under a predetermined operating condition of the engine to connect the canister and the air intake system, thereby generating a purge gas flow through the canister.

The FSCU advantageously also communicates with the ECU preferably via the vehicle CAN bus since this communication medium is less sensitive to electronic bugs. Through this multiplex bus, the ECU sends messages to the FSCU to enable the fuel pump, to control the output pressure of the fuel pump if a variable speed fuel pump is provided, to disable the fuel pump in the event of a vehicle accident, to control the purging of the vapour canister, to indicate the ambient temperature, to indicate the engine temperature and to request information from one or more sensors such as OBD sensors.

It is preferred that the FSCU is a low power microprocessor, eg. with a voltage of 5V or even 3.3V. This type of microprocessor may have advantageously the following allocations : a ROM of 128 kilobytes, a volatile memory of 4 kilobytes and a non-volatile memory of 2 kilobytes.

In particular the fuel system comprises other components like a fuel pump that controls said fuel flow, i.e. fuel is drawn from the fuel tank and is discharged from the fuel tank through an opening in the fuel tank wall.

The fuel pump is preferably controlled by the FSCU.

More preferably said fuel pump is controlled through a variable speed/variable pressure control program, as described in patent application EP 05107665, the content of which being included herein by reference.

The theory behind the present invention is the following. When fuel flows out of the fuel tank - corresponding to the consummation of the vehicle engine - the volume left empty by the fuel in the fuel tank is preferably replaced by an equivalent volume of fresh air coming from the evaporative emission control system, generally through the vent port. In order to avoid any deformation of the tank, the flow of air through an orifice depends generally on the orifice section according to the following relation:

$$\frac{dV}{dt} = A\sqrt{\frac{2\Delta p}{\rho}} \qquad (1)$$

where

$dV/dt$ :  air flow
$A$ :  orifice section
$\Delta p$ :  pressure differential between the inside of the tank and the atmosphere
$\rho$ :  air density

A change in the orifice section A gives in turn a change in $\Delta p$, for a constant air density $\rho$. It is namely so that the application of relation (1) with two different testing conditions, ie. $(A_1, \Delta p_1)$ and $(A_2, \Delta p_2)$, under the condition of constant fuel flow (and air flow accordingly), leads to the following relation

$$\left( \frac{A_1}{A_2} \right)^2 = \frac{\Delta p_2}{\Delta p_1} \tag{2}$$

Since ratios are used, any dependency to environmental changes is diminished.

The method according to the invention allows a continuous leak detection even for very small leaks. This means that during a driving cycle, a leak detection test can be launched at any time without the need to turn off the engine.

Preferably the method according to the invention is included in an OBD test.

In an embodiment of the invention, the pressure differentials $\Delta p_1$ and $\Delta p_2$ are measured only once after the interval of time $\Delta T$ from respectively $T_1$ and $T_2$.

In another embodiment of the invention,

a) said pressure differential $\Delta p_1$ is measured after successive intervals of time $\Delta T$ starting from $T_1$ in such a manner as to obtain one sequence of N measurements where N is a constant;
b) said pressure differentials $\Delta p_2$ is measured after successive intervals of time $\Delta T$ starting from $T_2$ in such a manner as to obtain one sequence of N measurements;
c) a sequence of N ratios of said pressure differentials $\Delta_{p1}$ and $\Delta_{p2}$ is computed from sequences of measurements obtained at stages a) and b), a numerical filter is applied to this sequence of N ratios in such a manner as to obtain a sequence of N filtered ratios, and said sequence of filtered ratios is compared to a sequence of N reference pressure differential ratios $\Delta p_L$ obtained with the same fuel system but comprising a calibrated leak.

Another object of the invention is a fuel system equipped with a leak detection and comprising

a) a fuel tank;
b) an orifice with a controlled section between the tank and the atmosphere;
c) means for varying said controlled section between at least two values;
d) means for measuring a pressure differential between the inside of the tank and the atmosphere at said at least two values of said controlled section;
e) means for computing the ratio between the two pressure differentials measured at stage d) and for comparing said ratio with a reference pressure differential ratio obtained with the same fuel system but with a calibrated leak and the atmosphere.

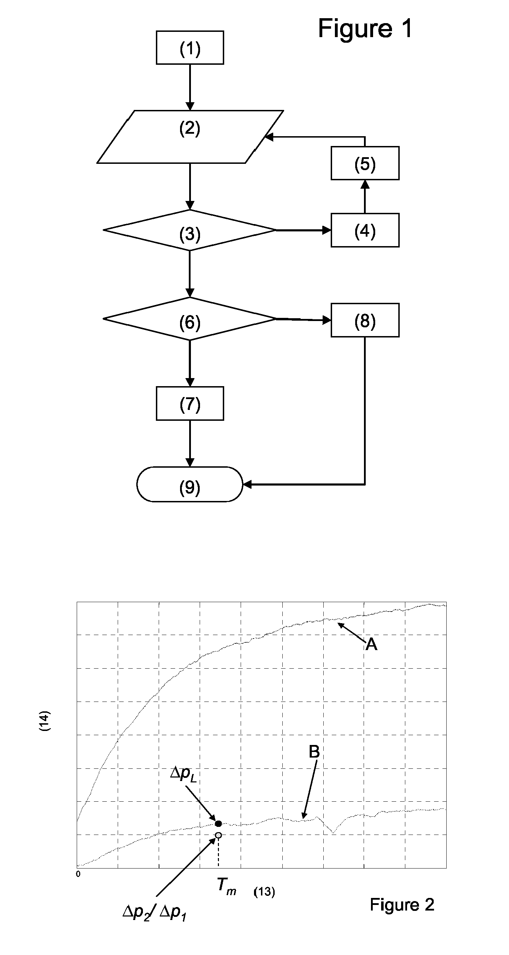

Figure 1 and 2 illustrate the present invention but are not to be construed as limiting its scope.

Figure 1 details a flow chart of a leak detection cycle according to an embodiment of the present invention.

The leak detection cycle is carried out for a fuel system comprising a fuel tank and an orifice with a controlled section $A$ between the tank and the atmosphere. The cycle is started with stage (1) where a flow F of fuel out of the tank is set to a testing value $F_{test}$, and section $A$ is set to a value $A_1$ at a time $T_1$.

During the whole leak detection cycle, the fuel flow is controlled by a fuel system control unit (FSCU).

At stage (2), a pressure differential $\Delta p_1$ between the inside of the fuel tank and the atmosphere is measured after an interval of time $\Delta T$ from $T_1$.

On the condition (verified at stage (3)) that the measurement at stage (2) corresponds to a first occurrence, said pressure differential $\Delta p_1$ is recorded at stage (4) and, at stage (5), the controlled section $A$ is set at a time $T_2$ to a value $A_2$ different from $A_1$. From stage (5) the leak cycle is processed back to stage (2) where a pressure differential $\Delta p_2$ is measured after the same interval of time $\Delta T$ but from $T_2$.

Then, since condition at stage (3) is not fulfilled any longer, stage (6) is carried out where a ratio $\Delta p_2/\Delta p_1$ is computed and is compared to a reference pressure differential ratio $\Delta p_L$ obtained with the same fuel system but comprising a calibrated leak.

If the ratio $\Delta p_2/\Delta p_1$ is greater than the reference ratio $\Delta p_L$ then stage (7) is processed where a no-leak detection information is communicated to the FSCU. If the ratio $\Delta p_2/\Delta p_1$ is smaller than or equal to the reference ratio $\Delta p_L$ then stage (8) is processed where a leak detection information is communicated to the FSCU.

The leak detection cycle is terminated at stage (9).

Figure 2 illustrates two reference curves A and B for the ratio $\Delta p_L$, respectively for a no-leak situation and a leak situation (corresponding to a calibrated leak section eg. an orifice diameter of 0.5 mm for small leak detection in OBD II tests). The axis (13) and (14) represent respectively the time and the ratio of pressure differentials. At time $T_m$, the reference ratio $\Delta p_L$ on curve B is compared to a measured ratio $\Delta p_2/\Delta p_1$. In this case, the reference ratio $\Delta p_L$ is bigger than the measured ratio $\Delta p_2/\Delta p_1$, i.e. there is a leak bigger than the calibrated leak in the fuel system.

## Claims

1. - A method of detecting a leak in a fuel system comprising a fuel tank and an orifice with a controlled section between the tank and the atmosphere, according to which

   a) the controlled section is set to a value $A_1$ at a time $T_1$ and a pressure differential $\Delta p_1$ between the inside of said fuel tank and the atmosphere is measured at least after an interval of time $\Delta T$ from $T_1$, for a constant fuel flow out of said fuel tank;
   b) the controlled section is set to a value $A_2$ at a time $T_2$ and a pressure differential $\Delta p_2$ between the inside of said fuel tank and the atmosphere is measured at least after the same interval of time $\Delta T$ from $T_2$, for the same constant fuel flow;
   c) a ratio of said pressure differentials $\Delta p_1$ and $\Delta p_2$ is computed and is compared to a reference pressure differential ratio $\Delta p_L$ obtained with the same fuel system but comprising a calibrated leak;
   d) a leak bigger than said calibrated leak is detected if said ratio computed at stage c) is smaller than said reference ratio $\Delta p_L$.

2. - Method according to claim 1, **characterized in that** the fuel system comprises an evaporative emission control system comprising a canister and an electronically controlled electromechanical valve, **in that** the orifice of controlled section is between the fuel tank and the canister, and **in that** said controlled section is controlled by the electromechanical valve.

3. - Method according to claim 2, **characterized in that** said valve comprises a stationary outer housing comprising at least three bores, and a translating inner section which translates along the primary axis of the outer housing and which comprises adequate bores defining with the bores of the housing at least three ports of the valve.

4. - Method according to anyone of claims 1 to 3, **characterized in that** the fuel system comprises a fuel system control unit (FSCU), and **in that** steps a) to d) are performed by the FSCU.

5. - Method according to claim 4, **characterized in that** said fuel system comprises a fuel pump, and **in that** said fuel flow is controlled by said fuel pump which is controlled by said FSCU.

6. - Method according to claim 5, **characterized in that** said fuel pump is controlled through a variable speed/variable pressure control program.

7. - Method according to anyone of claims 1 to 6, **characterized in that** said pressure differentials $\Delta p_1$ and $\Delta p_2$ are measured only once after the interval of time $\Delta T$ from respectively $T_1$ and $T_2$.

8. - Method according to anyone of claims 1 to 6, **characterized in that**

   a) said pressure differential $\Delta p_1$ is measured after successive intervals of time $\Delta T$ starting from $T_1$ in such a manner as to obtain one sequence of N measurements where N is a constant;
   b) said pressure differentials $\Delta p_2$ is measured after successive intervals of time $\Delta T$ starting from $T_2$ in such a manner as to obtain one sequence of N measurements;
   c) a sequence of N ratios of said pressure differentials $\Delta p_1$ and $\Delta p_2$ is computed from sequences of measurements obtained at stages a) and b), a numerical filter is applied to this sequence of N ratios in such a manner as to obtain a sequence of N filtered ratios, and said sequence of filtered ratios is compared to a sequence of N reference pressure differential ratios $\Delta p_L$ obtained with the same fuel system but comprising a calibrated leak.

9. - Method according to anyone of claims 1 to 8, **characterized in that** said method is included in an on-board diagnostic (OBD) test.

10. - A fuel system equipped with a leak detection and comprising

a) a fuel tank;

b) an orifice with a controlled section between the tank and the atmosphere;

c) means for varying said controlled section between at least two values;

d) means for measuring a pressure differential between the inside of the tank and the atmosphere at said at least two values of said controlled section;

e) means for computing the ratio between the two pressure differentials measured at stage d) and for comparing said ratio with a reference pressure differential ratio obtained with the same fuel system but with a calibrated leak and the atmosphere.

## Figure 1

Figure 2

**EP 1 816 338 A1**

European Patent
Office

**EUROPEAN SEARCH REPORT**

Application Number

EP 06 10 1356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 276 343 B1 (KAWAMURA KATSUHIKO; KOBAYASHI HIDEAKI) 21 August 2001 (2001-08-21) | 10 | INV. F02M25/08 |
| A | * abstract; figures * * column 10, line 8 - column 16, line 40 * ----- | 1 | |
| X | US 2001/004844 A1 (YAMAKI MASAHITO) 28 June 2001 (2001-06-28) * abstract; figures * | 10 | |
| A | * page 2, paragraph 16 - page 5, paragraph 41 * ----- | 1 | |
| X | US 6 105 556 A (TAKAKU YUTAKA ET AL) 22 August 2000 (2000-08-22) * abstract; figures * | 10 | |
| A | * column 4, line 64 - column 22, line 34 * ----- | 1 | |
| A | US 5 347 971 A (KOBAYASHI YASUNORI ET AL) 20 September 1994 (1994-09-20) * abstract; figures * * column 3, line 27 - column 6, line 52 * ----- | 1,10 | |
| A | US 2005/211228 A1 (AMANO NORIYASU ET AL) 29 September 2005 (2005-09-29) * abstract; figures * * page 3, paragraph 56 - page 6, paragraph 106 * ----- | 1,10 | TECHNICAL FIELDS SEARCHED (IPC) F02M F02D |
| D,A | US 5 637 788 A (REMBOSKI DONALD J ET AL) 10 June 1997 (1997-06-10) * abstract; figures * * column 2, line 12 - column 4, line 54 * ----- | 1,10 | |
| D,A | US 6 314 797 B1 (DAWSON GARY D ET AL) 13 November 2001 (2001-11-13) * abstract; figures * * column 3, line 9 - column 10, line 46 * ----- | 1,10 | |

The present search report has been drawn up for all claims

| Place of search | Date of completion of the search | Examiner |
|---|---|---|
| The Hague | 30 June 2006 | Döring, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 10 1356

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2006

| Patent document cited in search report | | Publication date | Patent family member(s) | | Publication date |
|---|---|---|---|---|---|
| US 6276343 | B1 | 21-08-2001 | JP | 3707522 B2 | 19-10-2005 |
| | | | JP | 2000064914 A | 03-03-2000 |
| US 2001004844 | A1 | 28-06-2001 | AU | 779860 B2 | 17-02-2005 |
| | | | AU | 7249900 A | 28-06-2001 |
| | | | EP | 1122422 A2 | 08-08-2001 |
| | | | JP | 2001182629 A | 06-07-2001 |
| US 6105556 | A | 22-08-2000 | DE | 19702584 A1 | 31-07-1997 |
| | | | JP | 3317121 B2 | 26-08-2002 |
| | | | JP | 9203352 A | 05-08-1997 |
| US 5347971 | A | 20-09-1994 | JP | 3116556 B2 | 11-12-2000 |
| | | | JP | 5340316 A | 21-12-1993 |
| US 2005211228 | A1 | 29-09-2005 | CN | 1673505 A | 28-09-2005 |
| | | | DE | 102005013918 A1 | 27-10-2005 |
| | | | US | 2006042605 A1 | 02-03-2006 |
| US 5637788 | A | 10-06-1997 | DE | 69616269 D1 | 29-11-2001 |
| | | | DE | 69616269 T2 | 27-06-2002 |
| | | | EP | 0789836 A1 | 20-08-1997 |
| | | | WO | 9706421 A1 | 20-02-1997 |
| US 6314797 | B1 | 13-11-2001 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5637788 A
- US 6314797 B
- EP 200605008 W
- EP 05107665 A